# EUROPÄISCHE PATENTSCHRIFT

(11) **EP 0 574 473 B1**
(45) Veröffentlichungstag und Bekanntmachung des Hinweises auf die Patenterteilung: **14.08.1996**
(21) Anmeldenummer: 92906021.8
(22) Anmeldetag: 03.03.1992
(51) Int. Cl.: E05B 49/00

(54) **OPTISCH ODER DURCH FUNK FERNSTEUERBARES KFZ-SCHLIESSSYSTEM**
SYSTEM WITH OPTICAL OR RADIO REMOTE CONTROL FOR CLOSING MOTOR VEHICLES
SYSTEME DE VERROUILLAGE DE VEHICULES A MOTEUR A COMMANDE OPTIQUE OU PAR RADIO

(30) Priorität: 07.03.1991 EP 91103519
(43) Veröffentlichungstag der Anmeldung: 22.12.1993
(73) Patentinhaber: SIEMENS AKTIENGESELLSCHAFT, 80333 München (DE)
(72) Erfinder: BACHHUBER, Anton, Dipl.-Ing., D-8069 Langquaid (DE); KERN, Maximilian, Dipl.-Ing., D-8400 Regensburg (DE); SCHNEIDER, Christian, Dipl.-Ing., D-8400 Regensburg (DE)
(86) Internationale Anmeldenummer: EP9200537
(87) Internationale Veröffentlichungsnummer: WO9215761

(56) Entgegenhaltungen:
- EP-A- 0 126 402
- EP-A- 0 265 728
- DE-U- 8 909 033

## Beschreibung

Die Erfindung geht von dem im Oberbegriff des Patentanspruches 1 definierten Gegenstand aus, der für sich vielfach vorbekannt ist, vgl. z.B.
- WO 90 / 14 484.
Dieses bekannte Kfz-Schließsystem ist ein Beispiel für ein sog. unidirektionales System, bei welchem nämlich die (Re-)Initialisierung ohne Dialog zwischen dem Sender und dem Empfänger durchgeführt wird. Die Erfindung ist wurde zwar zunächst für dieses bekannte unidirektionale Kfz-Schließsystem entwickelt. Sie ist aber nicht nur auf unidirektionale Schließsysteme, und schon gar nicht nur auf jenes spezielle bekannte unidirektionale Kfz-Schließsystem beschränkt, sondern kann auch bei bidirektionalen Systemen benutzt werden, bei welchen ein mehr oder weniger umfangreichen Dialog stattfindet.

Ein Problem bei solchen initialisierbaren Kfz-Schließsystemen ist, daß unerlaubte und unbeabsichtigte (Re-) Initialisierungen möglichst zuverlässig vermieden werden sollen. Die Erfindung betrifft daher vor allem entsprechende technische voraussetzungen zur Erzeugung der Initialisierungsbereitschaft des Kfz-Schließsystemes.

Daneben ist für sich bekannt, in einem Kfz eine Diagnoseschnittstelle, nämlich z.B. einen im Motorraum angebrachten Spezialstecker, anzubringen. Über diese Diagnoseschnittstelle kann - im Regelfall nur in entsprechend eingerichteten autorisierten Werkstätten - der Zustand von elektronischen und/oder mechanischen Kfz-Einheiten getestet bzw. abgefragt werden, z.B. die aktuellen Motoreigenschaften, Bremsenzustände und die Funktionstüchtigkeit von verschiedensten anderen elektronischen Einheiten wie Airbag-Steuereinheiten und ABS-Eigenschaften.

Die Aufgabe,
- unerlaubte und unbeabsichtigte (Re-)Initialisierungen möglichst zu vermeiden. indem durch entsprechende technische Vorsorgemaßnahmen möglichst nur autorisierte Fachkräfte in Werkstätten das Kfz-Schließsystem (re-)initialisieren können, wird erfindungsgemäß durch den im Patentanspruch 1 definierten Gegenstand gelöst.

Die Erfindung verhindert die unerlaubter und unbeabsichtigten (Re- ) Initialisierungen also, indem nur dann eine (Re-) Initialisierung möglich ist, wenn - im allgemeinen nur durch eine autorisierte Werkstätte - ein entsprechendes Signal über die Diagnoseschnittstelle an den Empfänger geliefert wird.

Die in den Unteransprüchen definierten Gegenstände betreffen zusätzliche technische Vorsorgemaßnahmen, welche die unerlaubte und unbeabsichtigte (Re-)Initialisierung weiter erschweren bzw. die autorisierte (Re-) Initialisierung erleichtern. U.a. gestatten nämlich die zusätzlichen Maßnahmen gemäß dem Patentanspruch
2, sicherzustellen, daß die (re-)initialisierende Person zusätzlich im Besitze des betreffenden Schlüssels ist, welcher individuell diesem Kfz zugeordnet ist,
3, zu verhindern, daß Unbefugte, die den Sondercode nicht kennen bzw. nicht erzeugen können, die (Re- ) Initialisierungsbereitschaft bereits durch ein andersartiges, dem Empfänger über die Diagnoseschnittstelle zugeleitetes Signal auslösen können, sowie
   - zu verhindern, daß die (Re-) Initialisierungsbereitschaft versehentlich - durch einen Unbefugten, aber sogar auch durch einen Autorisierten - bereits durch ein andersartiges, dem Empfänger über die Diagnoseschnittstelle zugeleitetes Signal auslöst wird,
4, zu erleichtern, daß der Empfänger, welcher durch das kurze, z.E. weit weniger als 1 Sekunde andauernde Signal getriggert wurde, ohne zu große Eile während der - z.B. folgenden 4 - Minuten einwandfrei (re-)initialisiert werden kann,
5, zu verhindern, daß das Kfz-Schließsystem ohne Besitz des richtigen Zündschlüssels und ohne Kenntnis der richtigen Betätigung dieses Zündschlüssels (re-) initialisiert werden kann, sowie
   - zu verhindern, daß die Zündung bei laufendem Motor die (Re-) Initialisierung beeinträchtigt,
6, zu verhindern, daß das Kfz-Schließsystem ohne Besitz des richtigen, optisch oder durch Funk steuernden Türschlüssels und ohne Kenntnis der richtigen Betätigungsweise dieses Zündschlüssels (re-) initialisiert werden kann, sowie
7, dem Autorisierten die (Re-) Initialisierung zu erleichtern, indem er dann nicht mehr in größeren Zeitabständen mehrfach nacheinander den Sender in entsprechender Weise betätigen muß.

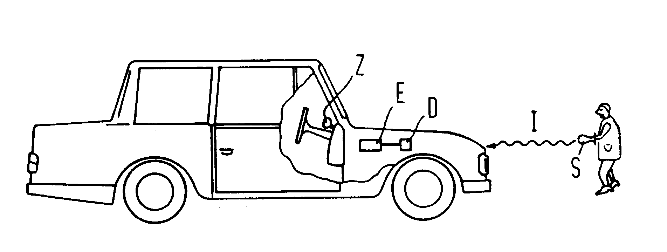

Die Erfindung und Weiterbildungen derselben werden anhand des in der Figur gezeigten Ausführungsbeispieles der Erfindung weiter erläutert, welches der Übersichtlichkeit wegen besonders einfach nur als Schema dargestellt wurde.

Diese Figur zeigt ein Beispiel für ein optisch, also z.B. durch Infrarot, oder durch Funk fernsteuerbares Kfz-Schließsystem, welches (re-) initialisiert werden soll.

Bei diesem System strahlt der dem Schlüssel entsprechende Sender S einen digitalen Code I aus, sobald der Benutzer ihn zum Öffnen - evtl. auch zum Schließen - der Türen und evtl. auch des Kofferraumes und der Motorhaube betätigt. Hierzu kann bei der Erfindung an sich ein beliebiger Code I verwendet werden. Es kann sich also z.B. um einen Festcode I handeln, welcher von Betätigung zu Betätigung stets unverändert bleibt. Es kann sich aber auch um einen Wechselcode handeln, indem der Code I von Betätigung zu Betätigung nach bestimmten, dem betreffenden Kfz-Schließsystem individuell zugeordneten Regeln bzw. Algorithmen geändert wird; - dann ist der ausgestrahlte Code I ein Code aus einer Serie von solchen Codes I, die alle das Öffnen der Türen usw. ermöglichen.

Dieser vom betätigten Sender S ausgestrahlte Code I wird von dem im Kfz angebrachten Empfänger E empfangen. Der Empfänger E öffnet (bzw. schließt) das betreffende Schloß oder die betreffenden Schlösser nach einem Vergleich des empfangenen Code I mit vorher im Empfänger E gespeicherten Digits, welche mit dem Code I - oder mit der Serie von Codes I - korrelieren müssen.

Der Code I soll sich mit Sicherheit von Kfz zu Kfz deutlich unterscheiden, wobei dieser Code - bzw. die betreffende Serie von Codes I - dem betreffenden Kfz zumindest im Rahmen anfänglicher Benutzungen des Kfz als Festcode oder Wechselcode zugeordnet werden muß. Evtl. muß später noch einmal oder noch mehrmals nachträglich die Codezuordnung wieder geändert werden, z.B. wenn ein zusätzlicher Schlüssel für einen weiteren Kfz-Benutzer angeschafft wird oder wenn ein Schlüssel verloren wurde und der Finder unberechtigt das Kfz benützen könnte. Diese erstmalige, anfängliche Zuordnung eines Code - bzw. einer Serie von Codes - nennt man Initialisierung, und die spätere, nachträgliche Neuzuordnung nennt man (Re-) initialisierung. Die Zuordnung bzw. Neuzuordnung erfolgt also durch eine (Re-)Initialisierung, indem einerseits im Sender S gespeicherte Digits und andererseits im Empfänger E gespeicherte Digits aufeinander abgestimmt werden, bzw. indem entsprechende neue Speicherungen von Digits im Empfänger E - evtl. auch im Sender S - vorgenommen werden, - wobei die im Sender S und im Empfänger E gespeicherten Digits - je nach dem speziellen Typ des Kfz-Schließsystems in unterschiedlicher Weise, wenn auch nach dafür typischen Regeln - miteinander korrelieren.

Normalerweise ist der Empfänger E nicht in einem Zustand, in welchem er zur (Re-) Initialisierung bereit ist, sondern nur in einem Zustand, in welchem er zum Empfang der zum Öffnen und/ oder Schließen dienenden Codes I bereit ist. Zur (Re-) Initialisierung muß der Empfänger E erst durch ein besonders Signal in seine (Re-)Initialisierungsbereitschaft gesteuert werden.

Wie erwähnt, ist es ein Problem bei solchen initialisierbaren Kfz- Schließsystemen, daß unerlaubte und unbeabsichtigte (Re-) Initialisierungen möglichst zuverlässig vermieden werden sollen. Die Erfindung betrifft vor allem technische Voraussetzungen zur Erschwerung einer ungewollten und unautorisierten Erzeugung der Initialisierungsbereitschaft des Kfz-Schließsystemes. Die Erfindung löst diese Aufgabe, unerlaubte und unbeabsichtigte (Re-) Initialisierungen möglichst zu vermeiden, indem durch entsprechende technische Vorsorgemaßnahmen möglichst nur autorisierte Fachkräfte in Werkstätten das Kfz-Schließsystem (re-) initialisieren können :

Bei der Erfindung nutzt man dazu die in vielen Kfz übliche, an sich nur in autorisierten Werkstätten einwandfrei bedienbare Diagnoseschnittstelle D, welche bekanntlich an sich im allgemeinen sonst nur zur elektrischen Überprüfung von Kfz-Einheiten dient und bei der Erfindung - unmittelbar oder mittelbar - mit dem Empfänger E verbunden ist. Der Empfänger E wird nämlich erfindungsgemäß erst durch ein diesem Empfänger E über die Diagnoseschnittstelle D zugeleitetes besonderes Signal in seine (Re-) Initialisierungsbereitschaft gesteuert. Die unerlaubte und unbeabsichtigte (Re-) Initialisierungen wird also erfindungsgemäß vermieden, indem durch entsprechende, kaum je zufällig (!) erfüllbare technische Bedingungen möglichst nur autorisierte, in die spezielle Technik eingeweihte Fachkräfte in Werkstätten das Kfz-Schließsystem (re-) initialisieren können, und zwar möglichst nur dann, wenn sie dazu die volle Absicht haben. Auch eine zufällige (Re-) Initialisierung durch diese Fachkräfte ist also vermieden, z.B. während irgendwelchen Kfz-Reparaturen, sogar bei irgendwelchen Überprüfungen von Kfz-Einrichtungen mittels der Diagnoseschnittstelle D, indem nur dann eine (Re-) Initialisierung möglich ist, wenn über die Diagnoseschnittstelle D ein entsprechendes bestimmtes Signal an den Empfänger E geliefert wird.

Um zusätzlich den Schutz gegen unerlaubte oder unbeabsichtigte (Re-) Initialisierung weiter zu verbessern, kann zusätzlich vorgesehen sein, daß sich die (re-) initialisierende Persor sozusagen zusätzlich erst gegenüber dem Empfänger E ausweisen muß, daß sie zur (Re-) Initialisierung berechtigt ist. Dazu kann zusätzlich vorgesehen sein, daß der Empfänger E erst durch ein weiteres Signal in seine (Re-) Initialisierungsbereitschaft gesteuert werden kann, welches nämlich durch das zusätzliche Hineinstecken und Drehen eines mechanischen, dem Kfz individuell zugeordneten Schlüssels ausgelöst wird, also z.B. durch Hineinstecken und Drehen des Zünd- schlüssels Z in die Stellung "Radio" oder in eine andere Stellung, und/oder z.B. durch Hineinstecken und Drehen eines am Sender S zusätzlich angebrachten mechanischen Türschlüssels in das zugehörende Schloß, - also z.B. in das Türschloß oder Zündschloß. Die (re-) initialisierende Person braucht also dazu nicht nur den richtigen Schlüssel, sondern sie muß diesen Schlüssel dazu auch fachkundig benützen.

Um zusätzlich zu verhindern, daß Unbefugte, die den Sondercode nicht kennen bzw. nicht erzeugen können, ein relativ leicht zufällig (!) erzeugbares Signal dem Empfänger E über die Diagnoseschnittstelle D zuleiten können, welches die (Re-) Initialisierungsbereitschaft auslöst, sowie um zu verhindern, daß - auch ein Autorisierter - versehentlich über die Diagnoseschnittstelle D die (Re-) Initialisierungsbereitschaft durch ein aus relativ einfachen Elementen bestehendes Signal auslöst, kann man vorsehen, daß nur ein kaum je zufällig erzeugbares, aus komplizierteren Elementen bestehendes Signal, welches über die Diagnoseschnittstelle D dem Empfänger zugeleitet wird, die (Re-) Initialisierungsbereitschaft auslöst : Man kann dazu nämlich den Empfänger E so dimensionieren, daß er erst durch einen über die Diagnoseschnittstelle (D) zugeleiteten digitalen Sondercode in seine (Re-) Initialisierungsbereitschaft gesteuert werden kann. Jene unerwünschten Zufälle sind dann weitestgehenc vermieden.

Um zusätzlich zu erleichtern, daß der Empfänger E, getriggert durch ein kurzes, z.B. weit weniger als 1 Sekunde andauerndes Signal, ohne zu große Eile während der folgenden, z.B. 4 Minuten dauernden Zeitspanne einwandfrei (re-) initialisiert werden kann, kann man den Empfänger E so gestalten, daß er zusätzlich erst durch ein über die Diagnoseschnittstelle D kurz andauerndes Signal sowohl zunächst in seine (Re-) Initialisieungsbereitschaft gesteuert werden kann, als auch danach für eine vorgegebene länger andauernde Zeitspanne in seiner (Re-) Initialisierungsbereitschaft verbleibt.

Um zusätzlich zu verhindern, daß das Kfz-Schließsystem ohne Besitz des richtigen Zündschlüssels und ohne Kenntnis der richtigen Betätigung dieses Zündschlüssels (re-) initialisiert werden kann, und um zusätzlich zu verhindern, daß die Zündung bzw. die damit verbundenen störenden hochfrequenten Atstrahlungen bei laufendem Motor die (Re-) Initialisierung beeinträchtigt, kann man zusätzlich vorsehen, daß der Empfänger E nur durch Drehen des in das Zündschloß hineingesteckten Zündschlüssels Z bis in eine Stellung, bei welcher er einrastet und bei welcher der Motor aber nicht läuft, in seine (Re-) Initialisierungsbereitschaft gesteuert werden kann.

Um zusätzlich zu verhindern, daß das Kfz-Schließsystem ohne Besitz des richtigen, optisch oder durch Funk steuernden Türschlüssels und ohne Kenntnis der richtigen Betätigungsweise dieses Zündschlüssels (re-) initialisiert werden kann, kann man ferner vorsehen, daß der Empfänger E zur (Re-) Initialisierung zusätzlich erst durch ein vom Sender S ausgestrahltes besonderes Sendersignal I in seine (Re-) Initialisierungsbereitschaft gesteuert werden kann. Dieses Sendersignal I kann dazu z.B. ein besonderer Code I sein, welcher nur für die Vorbereitung der (Re-) Initialisierung ausgestrahlt wird und welcher von der (re-) initialisierenden Person z.B. nur durch eine ganz besondere Bedienungsweise von am Schlüs- sel S angebrachten Druckknöpfen ausgelöst wird.

Um zusätzlich dem Autorisierten die (Re-) Initialisierung zu erleichtern, indem er dann während der (Re-) Initialisierung nicht mehr mehrfach nacheinander den Sender S in entsprechender Weise betätigen muß, kann jenes besondere Sendersignal I zusätzlich eine Folge von Digits enthalten, welche ihrerseits bereits jetzt den bei den späteren Betätigungen gültigen Code I - oder die bei den späteren Betätigungen gültige Serie von Codes I - festlegt.

## Patentansprüche

1. Optisch (I) oder durch Funk (I) fernsteuerbares Kfz-Schließsystem, wobei
- der dem Schlüssel entsprechende Sender (S) bei Betätigung durch einen Benutzer zum Öffnen, evtl. auch zum Schließen, einen digitalen Code (I) - bei Festcode stets denselben Code (I), bei Wechselcode einen solchen Code (I) aus einer Serie von solchen Codes (I) - ausstrahlt,
- dieser ausgestrahlte Code (I) von dem im Kfz angebrachten Empfänger (E) empfangen wird, welcher (E) das betreffende Schloß oder die betreffenden Schlösser - nach einem Vergleich des empfangenen Code (I) mit im Empfänger (E) gespeicherten, mit dem Code (I) oder mit der Serie von Codes (I) korrelierenden Digits - steuert,
- der Code (I) zumindest im Rahmen anfänglicher Benutzungen des Kfz als Festcode oder Wechselcode initialisiert wird und evtl. im Rahmen späterer Änderungen des Code (I) reinitialisiert wird, also für die folgenden Betätigungen durch Speichern von mit dem Code (I) korrelierenden Digits im Empfänger (E) - evtl. auch durch zusätzliches Speichern von mit dem Code (I) korrelierenden Digits im Sender (S) - festgelegt wird, und
- der Empfänger (E) zur Re-/Initialisierung, also zur Initialisierung und/oder zur Re-Initialisierung, erst durch ein Signal in seine Re-/Initialisierungsbereitschaft gesteuert werden muß, bevor der Empfänger (E) re-/initialisiert , werden kann,
**dadurch gekennzeichnet**, daß
- das Kfz in für sich bekannter Weise eine Diagnoseschnittstelle (D) zur elektrischen Überprüfung von Kfz-Einheiten aufweist, die derart ausgestaltet ist, daß
- der Empfänger (E) erst durch ein ihm (E) über die Diagnoseschnittstelle (D) zugeleitetes Signal in seine Re/-Initialisierungsbereitschaft gesteuert wird.

2. Schließsystem nach Patentanspruch 1,
**dadurch gekennzeichnet**, daß
- der Empfänger (E) zusätzlich erst durch Hineinstecken und Drehen eines mechanischen, dem Kfz individuell zugeordneten Schlüssels (Z), also z.B. des Zündschlüssels (Z) und/oder eines am Sender (S) zusätzlich angebrachten mechanischen Türschlüssels, in das zugehörende Schloß in seine Re-Initialisierungsbereitschaft gesteuert wird.

3. Schließsystem nach Patentanspruch 1 oder 2,
**dadurch gekennzeichnet**, daß
- der Empfänger (E) erst durch einen über die Diagnoseschnittstelle (D) zugeleiteten digitalen Sondercode in seine Re-/Initialisierungsbereitschaft gesteuert wird.

4. Schließsystem nach Patentanspruch 1, 2 oder 3,
**dadurch gekennzeichnet**, daß
- der Empfänger (E) erst durch ein über die Diagnoseschnittstelle (D) kurz andauerndes Signal sowohl zunächst in seine Re-/Initialisierungsbereitschaft gesteuert wird, als auch danach für eine vorgegebene länger andauernde Zeitspanne in seiner Re-/Initialisierungsbereitschaft verbleibt.

5. Schließsystem nach einem der vorhergehenden Patentansprüche,
**dadurch gekennzeichnet**, daß
- der Empfänger (E) durch Drehen des in das Zündschloß hineingesteckten Zündschlüssels (Z) bis in eine Stellung, bei welcher er (Z) einrastet und bei welcher der Motor aber nicht läuft, in seine Re-/Initialisierungsbereitschaft gesteuert wird.

6. Schließsystem nach einem der vorhergehenden Patentansprüche,
**dadurch gekennzeichnet**, daß
- der Empfänger (E) zur Re-/Initialisierung zusätzlich erst durch ein vom Sender (S) ausgestrahltes Sendersignal (I) in seine Re-/Initialisierungsbereitschaft gesteuert wird.

7. Schließsystem nach Patentanspruch 6,
**dadurch gekennzeichnet**, daß
- das Sendersignal (I) zusätzlich eine Folge von Digits enthält, welche den bei den folgenden Betätigungen gültigen Code (I) - oder die bei den folgenden Betätigungen gültige Serie von Codes (I) - festlegt.

## Claims

1. System with optical (I) or radio (I) remote control for locking motor vehicles, in which
- the transmitter (S) corresponding to the key broadcasts a digital code (I) - in the case of a permanent code always the same code (I), in the case of an interchangeable code one such code (I) from a series of such codes (I) - upon actuation by a user for opening, possibly also for locking,
- this broadcast code (I) is received by the receiver (E) fitted in the motor vehicle, which receiver (E) controls the relevant lock or the relevant locks - after a comparison of the received code (I) with digits stored in the receiver (E) and correlating with the code (I) or with the series of codes (I),
- the code (I) is initialized as a permanent code or interchangeable code at least on the occasions when the motor vehicle is first used and, possibly when changes are later made to the code (I), is re-/initialized, that is fixed for the following actuations by storing in the receiver (E) digits correlating with the code (I) - possibly also by additional storing in the transmitter (S) of digits correlating with the code (I), and
- for re-/initialization, that is for initialization and/or for re-initialization, the receiver (E) must first be switched by a signal to its re-/initialization readiness before the receiver (E) can be re-/initialized,
characterized in that
- the motor vehicle has in a way known per se a diagnostic interface (D) for the electrical testing of motor vehicle units, which is configured in such a manner that
- the receiver (E) is only switched to its re-/initialization readiness by a signal fed to it (E) via the diagnostic interface (D).

2. Locking system according to Patent Claim 1,
characterized in that
- in addition, the receiver (E) is only switched to its re-/initialization readiness by inserting into the associated lock and turning a mechanical key (Z) individually assigned to the motor vehicle, that is for example the ignition key (Z) and/or a mechanical door key additionally fitted to the transmitter (S).

3. Locking system according to Patent Claim 1 or 2,
characterized in that
- the receiver (E) is only switched to its re-/initialization readiness by a digital special code fed via the diagnostic interface (D).

4. Locking system according to Patent Claim 1, 2 or 3,
characterized in that
- the receiver (E) both is initially only switched to its re-/initialization readiness by a signal of short duration via the diagnostic interface (D), and subsequently remains for a predetermined period of time of longer duration in its re-/initialization readiness.

5. Locking system according to one of the preceding Patent Claims,
characterized in that
- the receiver (E) is switched to its re-/initialization readiness by turning the ignition key (Z) inserted in the ignition lock into a position in which it (Z) engages and in which the motor however is not running.

6. Locking system according to one of the preceding Patent Claims,
characterized in that
- for re-/initialization, the receiver (E) is additionally only switched to its re-/initialization readiness by a transmitter signal (I) broadcast by the transmitter (S).

7. Locking system according to Patent Claim 6,
characterized in that
- the transmitter signal (I) additionally contains a sequence of digits which fixes the code (I) valid for the following actuations - or the series of codes (I) valid for the following actuations.

## Revendications

1. Système de verrouillage de véhicule à moteur, commandé optiquement ou par radio, dans lequel:
- l'émetteur (S) correspondant à la clef, lorsqu'il est actionné par un utilisateur pour l'ouverture ou, éventuellement, pour la fermeture, émet un code numérique (I), qui est constamment le même code (I) dans le cas d'un code fixe et un code (I) provenant d'une série de tels codes (I) dans le cas d'un code variable,
- ce code (I), émis par rayonnement, est reçu par le récepteur (E) monté dans le véhicule à moteur, lequel récepteur (E) commande la serrure correspondante ou les serrures correspondantes - après comparaison du code (I) reçu à des symboles numériques (digits), mis en mémoire dans le récepteur (E) et établissant la corrélation avec le code (I) ou avec la série de codes (I),
- le code (I), au moins dans le cadre d'utilisations initiales du véhicule à moteur, est initialisé sous la forme d'un code fixe ou d'un code variable, et, éventuellement, est ré-initialisé dans le cadre de modifications ultérieures du code (I), et est déterminé, en vue des actionnements ultérieurs, par la mise en mémoire de digits établissant la corrélation avec le code (I) dans le récepteur (E) - éventuellement par la mise en mémoire supplémentaire, dans l'émetteur (S) de digits de corrélation avec le code (I) -,
- pour une initialisation et/ou une ré-initialisation, le récepteur (E) doit d'abord être commandé par un signal pour venir dans un état autorisant cette initialisation ou ré-initialisation, avant que ce récepteur (E) puisse être initialisé ou ré-initialisé,
caractérisé en ce que
- le véhicule à moteur présente, d'une façon connue par elle-même, une interface de diagnostic (D) pour le contrôle électrique d'unités du véhicule, interface qui est conçue de telle façon que
- le récepteur (E) n'est commandé que par un signal qui lui est envoyé par l'interface de diagnostic (D), pour passer dans l'état autorisant l'initialisation/ré-initialisation.

2. Système de verrouillage suivant la revendication 1, caractérisé en ce que
- en plus, le récepteur (E), pour autoriser son initialisation/ré-initialisation, n'est commandé que si une clef mécanique (Z) associée à chaque véhicule à moteur, par exemple la clef d'allumage (Z) et/ou une clef mécanique de porte, portée en plus par l'émetteur (S), est introduite et tournée dans la serrure correspondante.

3. Système de verrouillage suivant la revendication 1 ou la revendication 2, caractérisé en ce que
- le récepteur (E), pour passer dans l'état autorisant son initialisation/ré-initialisation, est commandé seulement par un code numérique spécial envoyé par l'interface de diagnostic (D).

4. Système de verrouillage suivant la revendication 1, 2 ou 3, caractérisé en ce que
- le récepteur (E) est commandé d'abord par un signal de courte durée émis par l'interface de diagnostic (D) pour passer dans l'état autorisant son initialisation/ré-initialisation, et reste ensuite dans cet état, pour une période de temps de durée prédéfinie, plus longue.

5. Système de verrouillage suivant l'une des revendications précédentes, caractérisé en ce que
- le récepteur (E), pour autoriser son initialisation/ré-initialisation, est commandé seulement par une rotation de la clef d'allumage (Z) dans la serrure d'allumage, jusque dans une position dans laquelle cette clef (Z) est bloquée, mais dans laquelle toutefois le moteur ne tourne pas.

6. Système de verrouillage suivant l'une des revendications précédentes, caractérisé en ce que
- pour passer dans l'état autorisant son initialisation/ré-initialisation, le récepteur (E) est, de plus, commandé seulement si un signal (I) est émis par l'émetteur (S) pour autoriser le passage dans cet état.

7. Système de verrouillage suivant la revendication 6, caractérisé en ce que
- le signal (I) de l'émetteur comporte, en plus, une suite de digits, qui détermine le code (I) valable pour les actionnements ultérieurs - ou la série de codes (I) valable pour les actionnements ultérieurs.
